# EUROPÄISCHE PATENTANMELDUNG

(11) **EP 2 832 953 A1**
(43) Veröffentlichungstag der Anmeldung: **04.02.2015**
(21) Anmeldenummer: 13178390.4
(22) Anmeldetag: 29.07.2013
(51) Int. Cl.: F01D 5/14, F01D 5/18

(54) **Turbinenschaufel**

(71) Anmelder: Siemens Aktiengesellschaft, 80333 München (DE)
(72) Erfinder: Ahmad, Fathi, 41564 Kaarst (DE); Heselhaus, Andreas, 40235 Düsseldorf (DE)

(57) **Zusammenfassung**

Eine Turbinenschaufel (120, 130) mit einem ersten Kühlluftkanal (152) und einem zweiten, durch eine Wandung (154) vom ersten Kühlluftkanal (152) abgetrennten Kühlluftkanal (152) mit einer Hauptrichtung, wobei der erste und der zweite Kühlluftkanal (152) durch eine erste Öffnung (160) der Wandung (154) miteinander verbunden sind, wobei die Wandung (154) eine zweite Öffnung (164) aufweist, soll eine verbesserte Kühlluftwirkung und somit höhere Betriebstemperaturen und einen höheren Wirkungsgrad der Turbine erlauben. Dazu schließt sich an die zweite Öffnung (164) ein Umlenkkanal (170) an, dessen Hauptrichtung im Bereich seiner Mündung in den zweiten Kühlluftkanal (152) im Wesentlichen parallel zur Hauptrichtung des zweiten Kühlluftkanals (152) ausgerichtet ist.

## Beschreibung

Die Erfindung betrifft eine Turbinenschaufel mit einem ersten Kühlluftkanal und einem zweiten, durch eine Wandung vom ersten Kühlluftkanal abgetrennten Kühlluftkanal mit einer Hauptrichtung, wobei der erste und der zweite Kühlluftkanal durch eine erste Öffnung der Wandung miteinander verbunden sind, wobei die Wandung eine zweite Öffnung aufweist.

Eine Turbine ist eine Strömungsmaschine, welche die innere Energie (Enthalpie) eines strömenden Fluids (Flüssigkeit oder Gas) in Rotationsenergie und letztlich in mechanische Antriebsenergie umwandelt. Dem Fluidstrom wird durch die möglichst wirbelfreie laminare Umströmung der Turbinenschaufeln ein Teil seiner inneren Energie entzogen, der auf die Laufschaufeln der Turbine übergeht. Über diese wird dann die Turbinenwelle in Drehung versetzt, die nutzbare Leistung wird an eine angekuppelte Arbeitsmaschine, wie beispielsweise an einen Generator, abgegeben. Laufschaufeln und Welle sind Teile des beweglichen Rotors oder Läufers der Turbine, der innerhalb eines Gehäuses angeordnet ist.

In der Regel sind mehrere Schaufeln auf der Achse montiert. In einer Ebene montierte Laufschaufeln bilden jeweils ein Schaufelrad oder Laufrad. Die Schaufeln sind leicht gekrümmt profiliert, ähnlich einer Flugzeugtragfläche. Vor jedem Laufrad befindet sich üblicherweise ein Leitrad. Diese Leitschaufeln ragen vom Gehäuse in das strömende Medium hinein und versetzen es in einen Drall. Der im Leitrad erzeugte Drall (kinetische Energie) wird im darauffolgenden Laufrad genutzt, um die Welle, auf der die Laufradschaufeln montiert sind, in Rotation zu versetzen. Leitrad und Laufrad zusammen bezeichnet man als Stufe. Oft sind mehrere solcher Stufen hintereinandergeschaltet.

Die Turbinenschaufeln einer Turbine sind besonderen Belastungen ausgesetzt. Die hohen Belastungen machen höchstbelastbare Werkstoffe erforderlich. Turbinenschaufeln werden daher aus Titan-Legierungen, Nickel-Superlegierung oder Wolfram-Molybdän-Legierungen gefertigt. Die Schaufeln werden für höhere Resistenz gegen Temperaturen so wie Erosion wie z. B. Lochfraß, auch bekannt unter "pitting corrosion", durch Beschichtungen geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln angewendet.

Vielfach werden in die Turbinenschaufeln Kühlkanäle eingegossen, die sich serpentinen- oder mäanderartig durch die jeweilige Turbinenschaufel winden, d. h. die Wandung zwischen zwei Kühlkanälen ist an deren jeweiligen Ende durch eine Öffnung unterbrochen, durch die die Kühlluft in den zweiten Kanal in die entgegengesetzte Richtung, d. h. die Hauptrichtung der Kühlluft des zweiten Kanals umgelenkt wird. Hierbei ist es teilweise notwendig, zusätzliche Öffnungen, so genannte "coo-ling air refresher" in der Wandung zwischen den zwei Serpentinengängen vorzusehen, die als teilweiser Bypass frischere, d. h. kühlere Luft in einen Mittelbereich des zweiten Kühlluftkanals speisen, um hier noch eine ausreichende Kühlwirkung zu erzielen. Dies kann aber auch aus Gründen der Stabilität des Gusskerns erforderlich sein.

Die thermische Belastung der Turbinenschaufeln begrenzt zurzeit den Wirkungsgrad der Turbine, da die Werkstoffe nur eine begrenzte Betriebstemperatur erlauben. Hohe Betriebstemperaturen wirken sich aber positiv auf den Carnot-Wirkungsgrad aus.

Es ist daher Aufgabe der Erfindung, eine Turbinenschaufel der eingangs genannten Art anzugeben, die eine verbesserte Kühlluftwirkung und somit höhere Betriebstemperaturen und einen höheren Wirkungsgrad der Turbine erlaubt.

Diese Aufgabe wird erfindungsgemäß gelöst, indem sich an die zweite Öffnung ein Umlenkkanal anschließt, dessen Hauptrichtung im Bereich seiner Mündung in den zweiten Kühlluftkanal im Wesentlichen parallel zur Hauptrichtung des zweiten Kühlluftkanals ausgerichtet ist.

Die Erfindung geht dabei von der Überlegung aus, dass der durch die cooling air refresher gebildete aerodynamische Bypass zwischen zwei Kühlluftkanälen den Kühlluftstrom empfindlich stören kann und somit zu Problemen bei der Kühlung der Turbinenschaufel führen kann. Es wurde überraschend festgestellt, dass aufgrund der teilweise starken Druckunterschiede zwischen benachbarten Kühlluftkanälen die Kühlluft den cooling air refresher mit bis zu 0,8 Ma verlassen kann. Dies bedeutet, dass der Impuls der Kühlluft aus dem cooling air refresher wesentlich größer ist als der Impuls der übrigen im Kühlluftkanal entlang der Hauptrichtung strömenden Kühlluft. Der Strom geht somit nicht in die Hauptrichtung über, sondern trifft nahezu ungebremst an die gegenüberliegende Wand und steht stromab des cooling air refreshers nur begrenzt zur Verfügung. Um diesem Umstand zu begegnen, sollte daher eine mechanische Umlenkung des Kühlluftstroms aus dem cooling air refresher in die Hauptrichtung des zweiten Kanals vorgesehen werden. Dies ist erreichbar, indem sich an die Öffnung cooling air refreshers ein Umlenkkanal anschließt, der die Kühlluft parallel zur Hauptrichtung des zweiten Kanals ausrichtet.

In vorteilhafter Ausgestaltung ist wird der zweite Kühlluftkanal von einer Außenwand der Turbinenschaufel begrenzt, die eine Mehrzahl von Kühlluftaustrittsöffnungen aufweist. Insbesondere bei Kühlluftkanälen, die direkt an die Außenwand der Schaufel angrenzen und Austrittsöffnungen für Filmkühlung aufweisen, so z. B. an der Profilnase, ergibt sich nämlich das Problem, dass die mit hohem Impuls aus dem cooling air refresher austretende Kühlluft direkt auf die gegenüberliegenden Austrittsöffnungen trifft und dort ausströmt. Somit steht stromab des cooling air refreshers kaum mehr frische Kühlluft zur Verfügung. Daher ist die beschriebene Umlenkung hier besonders vorteilhaft.

In weiterer vorteilhafter Ausgestaltung wird eine Begrenzung des Kühlluftkanals von einem sich an die zweite Öffnung anschließenden Teil der Wandung gebildet. Mit anderen Worten: Der Umlenkkanal verläuft parallel zur Wandung, so dass die Wandung eine Begrenzung zwischen erstem Kühlluftkanal und Umlenkkanal bildet. Dies ermöglicht eine besonders einfache Formgebung beim Gießprozess, da die entsprechende Wandung gerade durchgehend ausgestaltet sein kann.

In noch weiterer vorteilhafter Ausgestaltung wird eine Begrenzung des Kühlluftkanals durch parallele, gegeneinander versetzte Teile der Wandung gebildet. Die beiden Teile der Wandung dies- und jenseits der Öffnung des werden also parallel versetzt über die Öffnung hinaus verlängert und überlappen damit teilweise. Hierdurch kann der Umlenkkanal durch einfache Verlängerung der Wandungsteile ohne zusätzliche Wandungen gebildet werden.

In einer ersten vorteilhaften Ausgestaltung der Turbinenschaufel wird der Versatz der Wandung dabei außerhalb des Bereiches des Kühlluftkanals derart zurückgeführt, dass die Wandung außerhalb des Bereiches des Kühlluftkanals in einer Geraden verläuft. Mit anderen Worten: Die Wandung verläuft entlang einer Geraden, wobei ein Teil der Wandung auf einer Seite der Öffnung ausgelenkt und parallel zum anderen Teil der Wandung auf der anderen Seite der Wandung geführt wird. Dieser Teil beschreibt also im Bereich der Öffnung eine S-Form, wodurch der Umlenkkanal gebildet wird.

In einer zweiten, alternativen vorteilhaften Ausgestaltung verlaufen die durch die zweite Öffnung unterschiedenen, außerhalb des Bereiches des Kühlluftkanals liegenden Teile der Wandung auf zueinander beabstandeten, parallelen Geraden. Das bedeutet, dass die beiden Teile der Wandung dies- und jenseits der Öffnung parallel zu einander verlaufen, jedoch nicht auf einer Geraden liegen. Sie bilden jeweils eine Gerade, wobei die beiden Geraden sich im Bereich des cooling air refreshers überlappen und so den Umlenkkanal für die Kühlluft bilden.

Vorteilhafterweise ist dabei die Länge des Kühlluftkanals größer als dessen Breite. Die Länge bemisst sich dabei als die Strecke, entlang derer die beiden Wandungsteile parallel zueinander verlaufen, während die Breite durch den Abstand der beiden Wandungsteile gebildet ist. Hierdurch wird gewährleistet, dass eine ausreichende Umlenkung des Impulses der Kühlluft erfolgt und der senkrecht zur Hauptrichtung führende Impulsanteil weitgehend eliminiert wird.

Ein Stator oder Rotor für eine Turbine umfasst vorteilhafterweise eine derartige Turbinenschaufel als Leit- bzw. Laufschaufel.

Eine Turbine umfasst vorteilhafterweise einen derartigen Stator und/oder Rotor.

Vorteilhafterweise ist die Turbine dabei als Gasturbine ausgelegt. Gerade in Gasturbinen sind die thermischen und mechanischen Belastungen besonders hoch, so dass die beschriebene Ausgestaltung der Turbinenschaufel besondere Vorteile hinsichtlich der Kühlung und damit auch des Wirkungsgrads bietet.

Eine Kraftwerksanlage umfasst vorteilhafterweise eine derartige Turbine.

Die mit der Erfindung erzielten Vorteile bestehen insbesondere darin, dass durch die gezielte Umlenkung der Kühlluft in einem cooling air refreshers in die Strömungsrichtung des Zielkühlkanals eine gleichmäßigere Kühlung insbesondere an der Profilnase einer Turbinenschaufel erreicht wird. Es erfolgt kein Kreuzen des Kühlluftstroms, wodurch auch die Anzahl der cooling air refresher erhöht werden kann, was wiederum die Gusskernstabilität erhöht und damit Vorteile in der Herstellung der Turbinenschaufel bringt. Durch die verbesserte Kühlluftführung wird die Kühlwirkung verbessert und gleichzeitig der Kühlluftverbrauch vermindert. Dies erhöht den Wirkungsgrad der Turbine.

Ausführungsbeispiele der Erfindung werden anhand einer Zeichnung näher erläutert. Darin zeigen:
- FIG 1: einen teilweisen Längsschnitt durch eine Gasturbine,
- FIG 2: das Profil einer Laufschaufel,
- FIG 3: einen Längsschnitt durch die Laufschaufel,
- FIG 4: einen cooling air refresher in einer ersten Auführungsform, und
- FIG 5: einen cooling air refresher in einer zweiten Auführungsform.

Gleiche Teile sind in allen Figuren mit denselben Bezugszeichen versehen.

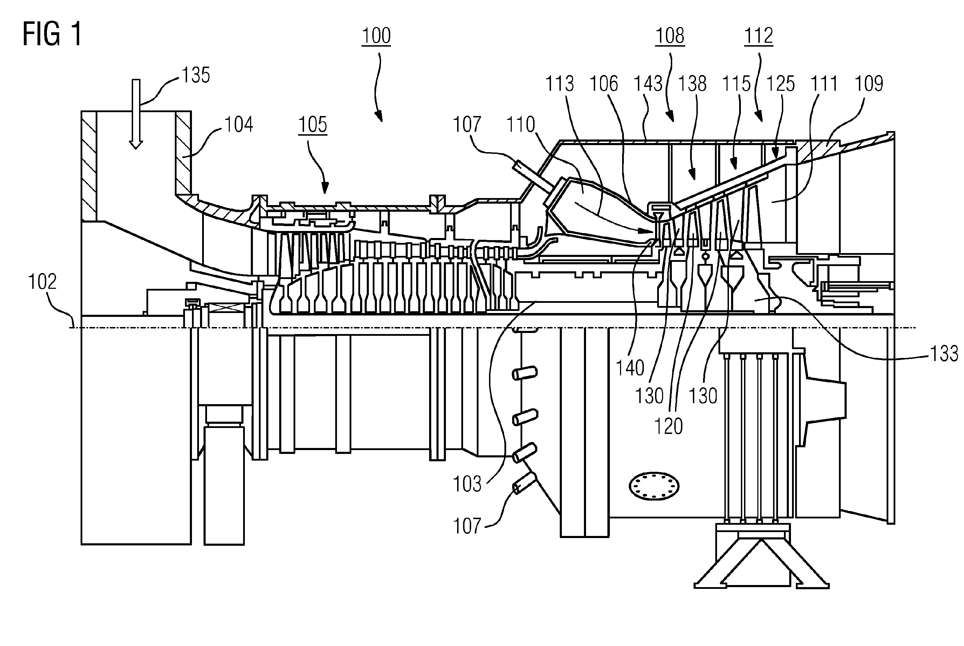

Die FIG 1 zeigt eine Turbine 100, hier eine Gasturbine, in einem Längsteilschnitt. Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Um den dort herrschenden Temperaturen standzuhalten, werden diese mittels eines Kühlmittels gekühlt. Ebenso können die Schaufeln 120, 130 Beschichtungen gegen Korrosion (MCrAlX; M = Fe, Co, Ni, Seltene Erden) und Wärme (Wärmedämmschicht, beispielsweise ZrO2, Y204-Zr02) aufweisen.

Jede Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Dichtring 140 des Stators 143 festgelegt. Jeder Dichtring 140 umschließt dabei die Welle des Rotors 103.

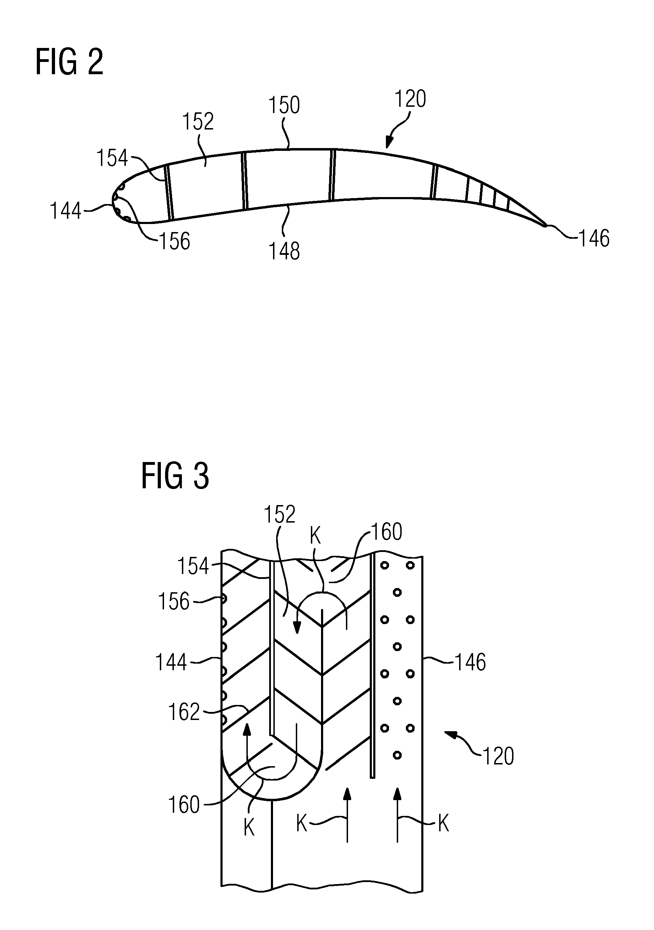

In FIG 2 ist beispielhaft das Profil einer Laufschaufel 120 gezeigt. Das Profil ähnelt dem einer Flugzeugtragfläche. Es weist eine abgerundete Profilnase 144 und einer Profilhinterkante 146 auf. Zwischen Profilnase 144 und Profilhinterkante 146 erstrecken sich die Druckseite 148 und die Saugseite 150 der Laufschaufel. Zwischen Druckseite 148 und Saugseite 150 sind Kühlluftkanäle 152 eingebracht, die sich entlang der in die FIG 2 hineinführenden Haupterstreckungsrichtung der Laufschaufel 120 erstrecken und durch Wandungen 154 voneinander abgegrenzt sind.

Im Bereich der Profilnase 144 sind dabei Kühlluftaustrittsöffnungen 156 vorgesehen, durch die Kühlluft austreten kann und so einen schützenden Kühlfilm auf der Außenseite der Laufschaufel 120 bildet. In dem an die Profilhinterkante 146 angrenzenden Kühlluftkanal 152 sind zusätzlich stiftartige Kühlkörper 158, so genannte "pin fins" angeordnet, die durch ihre im Querschnitt der Kühlluft stehende Oberfläche den Wärmeübertrag von der Kühlluft in die Laufschaufel 120 verbessern.

FIG 3 zeigt die Laufschaufel 120 im Längsschnitt. Erkennbar ist hier, dass die drei an die Profilnase 144 anschließenden, parallelen Kühlkanäle 152 über Öffnungen 160 derart verbunden sind, dass sie einen mäanderförmigen gemeinsamen Kanal bilden. Kühlluft K tritt am unteren Ende der FIG 3 ein und wird an jeder Öffnung 160 in die entgegengesetzte Richtung umgelenkt und strömt so entlang des Kanals weiter, bis sie schließlich an den Kühlluftaustrittsöffnungen 156 austritt.

In den genannten drei Kühlluftkanälen 152 sind Kühlrippen 162 auf der flachen Außenseite der Laufschaufel 120 angeordnet, die als Turbolatoren wirken und so die Kühlwirkung verbessern. Der der Profilhinterkante 146 zugewandte Kühlluftkanal 152 ist hingegen separat geschaltet und weist wie beschrieben Kühlkörper 158 auf. In FIG 3 ist erkennbar, dass die Kühlkörper 158 ein Gitter bilden.

Die beschriebene Kühlstruktur wurde am Beispiel einer Laufschaufel 120 erläutert. Ebensolche Kühlstrukturen können auch entsprechend in Leitschaufeln 130 vorgesehen sein. Die im Folgenden beschriebene Ausgestaltung einer Wandung 154 zwischen zwei Kühlluftkanälen 154 kann dort ebenso verwirklicht sein.

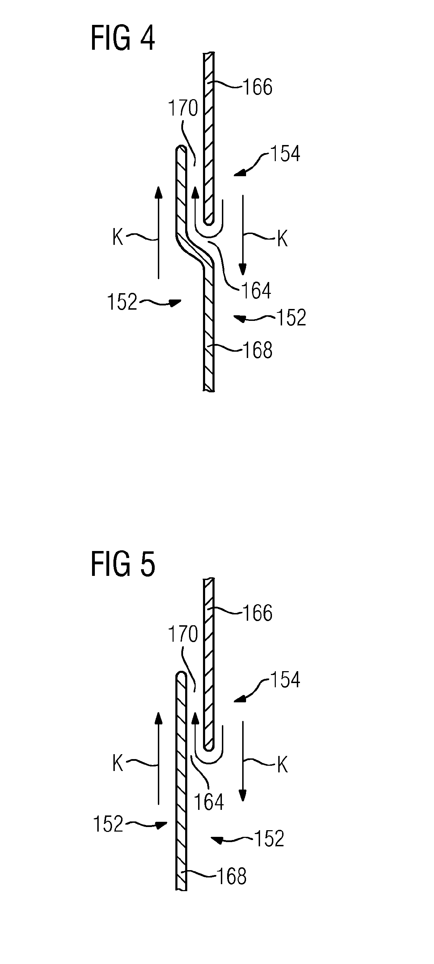

FIG 4 und FIG 5 zeigen jeweils die Wandung 154 zwischen dem an die Profilnase 144 angrenzenden Kühlkanal 152 und dem ihm benachbarten Kühlkanal 152. Aufgrund des Austritts der Kühlluft K durch die Kühlluftaustrittsöffnungen 156 ist es hier erforderlich, an verschiedenen Stellen der Wandung 152 cooling air refresher vorzusehen. Diese umfassen im Wesentlichen eine Öffnung 164 in der Wandung 152, so dass diese in einen ersten Teil 166 und einen zweiten Teil 168 getrennt wird.

Durch den erheblichen Druckunterschied zwischen den Kühlluftkanälen 152 tritt durch die Öffnung 164 Kühlluft K mit hohem Impuls in den an die Profilnase 144 angrenzenden Kühlluftkanal 152. Dessen Hauptrichtung der Strömung der Kühlluft K weist in den FIG 4 und 5 analog zu FIG 3 nach oben. Damit diese Kühlluft K nicht direkt senkrecht zur Hauptrichtung in die Kühlaustrittsöffnungen 156 gegenüber der Öffnung 164 strömt, schließt sich in den Ausführungsbeispielen der FIG 4 und 5 jeweils ein Umlenkkanal 170 an, der parallel zur Hauptrichtung ausgerichtet ist. Die Kühlluft K im Umlenkkanal 170 strömt somit parallel zur der Kühlluft K im an die Profilnase 144 angrenzenden Kühlluftkanal 152.

Im Ausführungsbeispiel der FIG 4 ist dies dadurch realisiert, dass im Bereich der Öffnung 164 der zweite Teil 168 der Wandung 154 S-förmig versetzt wird und mit Versatz parallel zum ersten Teil 166 verläuft. Außerhalb des Bereiches des Umlenkkanals 170 verlaufen die beiden Teile 166, 168 auf einer Linie.

Im Ausführungsbeispiel der FIG 5 verlaufen die beiden Teile 166, 168 nicht auf einer Linie, sondern sind gegeneinander parallel versetzt. Nur durch eine gerade Überlappung bilden sie den Umlenkkanal 170.

In beiden Ausführungsbeispielen ist die Länge des Umlenkkanals 170 dabei größer als seine Breite, so dass eine zuverlässige Umlenkung der Kühlluft K gewährleistet ist.

## Patentansprüche

1. Turbinenschaufel (120, 130) mit einem ersten Kühlluftkanal (152) und einem zweiten, durch eine Wandung (154) vom ersten Kühlluftkanal (152) abgetrennten Kühlluftkanal (152) mit einer Hauptrichtung,
wobei der erste und der zweite Kühlluftkanal (152) durch eine erste Öffnung (160) der Wandung (154) miteinander verbunden sind,
wobei die Wandung (154) eine zweite Öffnung (164) aufweist, wobei sich an die zweite Öffnung (164) ein Umlenkkanal (170) anschließt, dessen Hauptrichtung im Bereich seiner Mündung in den zweiten Kühlluftkanal (152) im Wesentlichen parallel zur Hauptrichtung des zweiten Kühlluftkanals (152) ausgerichtet ist.

2. Turbinenschaufel (120, 130) nach Anspruch 1,
bei der der zweite Kühlluftkanal (152) von einer Außenwand der Turbinenschaufel (120, 130) begrenzt wird, die eine Mehrzahl von Kühlluftaustrittsöffnungen (156) aufweist.

3. Turbinenschaufel (120, 130) nach Anspruch 1 oder 2,
bei der eine Begrenzung des Kühlluftkanals (152) von einem sich an die zweite Öffnung (164) anschließenden Teil (166) der Wandung (154) gebildet wird.

4. Turbinenschaufel (120, 130) nach einem der vorhergehenden Ansprüche,
bei der eine Begrenzung des Kühlluftkanals (152) durch parallele, gegeneinander versetzte Teile (166, 168) der Wandung (154) gebildet wird.

5. Turbinenschaufel (120, 130) nach Anspruch 4,
bei der der Versatz der Wandung (154) außerhalb des Bereiches des Kühlluftkanals (152) derart zurückgeführt wird, dass die Wandung (154) außerhalb des Bereiches des Kühlluftkanals (152) in einer Geraden verläuft.

6. Turbinenschaufel (120, 130) nach Anspruch 4,
bei der die durch die zweite Öffnung (164) unterschiedenen, außerhalb des Bereiches des Kühlluftkanals (152) liegenden Teile (166, 168) der Wandung (154) auf zueinander beabstandeten, parallelen Geraden verlaufen.

7. Turbinenschaufel (120, 130) nach einem der Ansprüche 4 bis 6,
bei der Länge des Kühlluftkanals (152) größer als dessen Breite ist.

8. Stator (143) oder Rotor (103) für eine Turbine (100) mit einer Turbinenschaufel (120, 130) nach einem der vorhergehenden Ansprüche.

9. Turbine (100) mit einem Stator (143) und/oder Rotor (103) nach Anspruch 8.

10. Turbine (100) nach Anspruch 8,
die als Gasturbine (100) ausgelegt ist.

11. Kraftwerksanlage mit einer Turbine (100) nach Anspruch 9 oder 10.
